# EUROPEAN PATENT APPLICATION

(11) **EP 2 273 635 A2**
(43) Date of publication of application: **12.01.2011**
(21) Application number: 10251145.8
(22) Date of filing: 24.06.2010
(51) Int. Cl.: H02G 3/00

(54) **Modular network for distribution and control of electrical power**

(30) Priority: 07.07.2009 GB 0911741
(71) Applicant: Hager Engineering Limited, Telford, Shropshire TF1 4FT (GB)
(72) Inventor: Smith, Nick, Telford TF1 7FT (GB); Appleton, John, Telford, Shropshire TF1 7FT (GB)
(74) Representative: Instone, Terry

(57) **Abstract**

A modular network for providing power, lighting and control circuits has conductive pathways operably distributed to a plurality of power outlet sockets and/or luminaires and/or switching means and/or power control means. The network has a local distribution module (20) operably connected to a power supply as input and type-one sockets (1,2,3,4,5) for output of the conductive pathways (EL,PL,N,SL,CPC,D+,D-), and termination modules such as power outlet sockets, luminaires (24,25,26), switching means (28) or power control means (27) with either a type-one plug or a type-two socket, and connection cables having a type-one plug connected to a type-two plug by a length of insulated cable. The termination modules are connected to the type-one sockets of the local distribution module either directly or indirectly via the connection cables and/or marshalling modules.

A type-one plug is arranged to operably engage with a type-one socket but not with a type-two socket and a type-two plug is arranged to operably engage with a type-two socket but not with a type-one socket. The modular network allows for the incorporation of the system into a building without the need for extensive hardwiring operations by an electrician. The system may incorporate a digital control network such that energy saving measures may be incorporated into the modular network by means of environmental sensor systems.

## Description

### Introduction

The invention relates to a modular network for distributing electrical power in a structure, such as a building, to power outlet sockets, luminaires, control switches and the like. In particular, the invention relates to a modular network which may be customised to a particular structure, such as a building having various interior rooms, corridors etc., by plugging together modules, such as prefabricated or pre-wired modules, using connection cables in order to achieve a power distribution network. The invention is also suitable for a network that, in addition to distributing electrical power, enables control and switching of outlet sockets and/or luminaires.

Typical buildings are provided with networks of electrical power outlet sockets and lighting systems which are interconnected, via a wiring network and control switches, to a mains power supply. This is the case for both residential buildings and larger non-residential buildings. There may be a central distribution board providing single phase inlet electrical power to the networks, with the central distribution board powered by an external three phase (three pole and neutral) mains supply.

Various methods have been used in the past for the connection of electrical power and lighting systems. In one method, cables are connected from a central distribution board, which distributes the single phase mains supply, directly to outlet sockets, switches and luminaires. Containment of cables is typically within conduit or trunking extending through the structure. The wiring of switches, cables luminaires is typically achieved using hard-wired screw connectors. Cables are cut to length and hard-wired to the luminaires or switches.

In another method luminaires are linked into a hard wired system using plug and socket connection interfaces. The sockets form part of the fixed wiring with the plug connected to the luminaire fitting by a cable to allow simple connection and disconnection of luminaires into the power supply network. The plug may be pre-wired into order to reduce installation time.

Another method, typically referred to as a spider distribution method, involves the use of marshalling boxes. The marshalling boxes are used to distribute and control power to a number of luminaire fittings. Control may be integrated by the use of an occupancy sensor, for instance, to provide localised automatic switching of all luminaires attached to a particular marshalling box. Marshalling boxes have typically a single incoming hardwired connection and the electrical and are a cost effect method for installations of large numbers of luminaires. Rather than the luminaires being hard-wired to the marshalling box and control system, the luminaires may be connected to the marshalling box via a plug and socket connection at each luminaire.

Digital lighting control systems are also known in the prior art. Such systems distribute both power and data signals to digital controllers arranged to control the power supply to luminaires. Such systems offer benefits of increases levels of control and potential for energy saving. For instance, digital occupancy sensors may be used to detect when rooms are empty and switch off the lights in order to save energy. Ambient lighting detectors may also be used to switch off lights when there is sufficient ambient lighting that electrical lighting is unnecessary. Over-ride mechanisms may be provided. Digital communication protocols such as DALI or DSI are used to control the individual systems. DALI is Digital Addressable Lighting Interface as set out in IEC62386. DSI is Digital Signal Interface and was the precursor for the DALI system.

Typically, control systems and power distribution systems are dealt with as separate but interconnected systems by installers.

In large structures, such as non-residential buildings, conventional hardwiring installation methods usually involve the installation of protective channels in walls or floors through which cables pass. Cables or bundles of cables are inserted through these channels and interconnected with the mains power supply through distribution boards, junction boxes, switches, luminaires and the like. Cable ends eventually connect to an end component such as a socket outlet, a control switch or a luminaire. Although some of the connections may be achieved using plug/socket arrangements, conventional systems invariably require extensive hardwiring by an electrician.

Hence, there is a need for a modular system for distributing electrical power from a mains source to outlet sockets, control switches and luminaires which overcomes the disadvantages associated with the existing systems and which allows for the incorporation of the system into a building without the need for extensive hardwiring operations by an electrician. There is also a need for such a system which may incorporate a digital control network such that energy saving measures may be incorporated into the network by means of environmental sensor systems.

Hence, it is one object of the invention to provide a modular network capable of distributing electrical power throughout a building through a variety of circuits with minimal hardwiring requirements. It is also an object of the invention to provide components for such a modular network, power and lighting arrays comprising such modular networks and methods for using such networks and arrays to provide power, lighting and control circuits for a structure. In particular, it is also an object of the invention to provide a kit of modular parts which may be easily and simply interconnected to form such networks.

### Summary of Invention

It is one object of the invention to provide a modular network capable of distributing electrical power throughout a building through a variety of circuits with minimal hardwiring requirements. It is also an object of the invention to provide components for such a modular network, power and lighting arrays comprising such modular networks and methods for using such networks and arrays to provide power, lighting and control circuits for a structure. In particular, it is also an object of the invention to provide a kit of modular parts which may be easily and simply interconnected to form such networks.

A first aspect of the invention provides a modular network for providing power, lighting and control circuits for a location in a structure, wherein the modular network comprises a plurality of conductive pathways operably distributed to a plurality of power outlet sockets and/or luminaires and/or switching means and/or power control means, wherein the modular network comprises:
a local distribution module operably connected to a power supply as input and comprising a plurality of type-one sockets for output of the conductive pathways,
optionally, one or more marshalling modules comprising a type-two socket for input of the conductive pathways and at least one type-one socket operably connected thereto for output of the conductive pathways,
one or more termination modules selected from power outlet sockets, luminaires, switching means, power control means and combinations thereof, each comprising either a type-one plug or a type-two socket,
and one or more connection cables comprising a type-one plug operably connected to a type-two plug by a length of insulated cable,
wherein the termination modules are operably connected to the type-one sockets of the local distribution module either directly or indirectly via the connection cables and/or optional marshalling modules,
and wherein a type-one plug is arranged to operably engage with a type-one socket but not with a type-two socket and a type-two plug is arranged to operably engage with a type-two socket but not with a type-one socket.

A second aspect of the invention provides a power and lighting array comprising a plurality of modular networks according to the first aspect of the invention, for providing power, lighting and control circuits for a plurality of locations in a structure and central distribution unit operably connected to a mains three pole and neutral power supply, wherein the single phase power supplies for each modular network are provided by the central distribution unit.

A third aspect of the invention provides a method for supplying power, lighting and control circuits for a structure, comprising providing one or more modular networks according to the first aspect of the invention, or a power and lighting array according to the second aspect of the invention, in the structure. Typically the structure will be a building.

A fourth aspect of the invention provides a connection cable for use in a modular network according to the first aspect of the invention comprising:
a first electrical plug of type-one at a first end,
a second electrical plug of a type-two at a second end,
three or more insulated electrical wires operably connecting the connection pins of the first and second plugs, preferably wherein at least three of the wires are rated to carry a current 13 amperes or more, more preferably 16 A or more, and wherein the connectors of the type-one plug are arranged to engage operably with corresponding connectors of a type-one socket but not with connectors of a type-two socket and the connectors of the type-two plug are arranged to engage operably with corresponding connectors of said type-two socket but not with connectors of said type-one socket.

A fifth aspect of the invention provides a marshalling module for use in a modular network according to any one of claims 1 to 13 comprising:
a first electrical socket of type-two, and
a plurality of second electrical sockets of type-one,
wherein the connectors of the type-two socket are operably connected to corresponding connectors of the type-one sockets, and wherein the connectors of the type-one sockets are arranged to engage operably with a type-one plug but not with a type-two plug and the connectors of the type-two socket are arranged to engage operably with said type-two socket but not with said type-one socket.

A sixth aspect of the invention provides a kit of parts for interconnecting to form a modular network according to the first aspect of the invention, wherein the kit comprises:
a local distribution module operably connectable to a power supply as input and comprising a plurality of type-one sockets for output of the conductive pathways,
optionally, one or more marshalling modules comprising a type-two socket for input of the conductive pathways and at least one type-one socket operably connected thereto for output of the conductive pathways,
one or more termination modules selected from power outlet sockets, luminaires, switching means, power control means and combinations thereof, each comprising either a type-one plug or a type-two socket,
and one or more connection cables comprising a type-one plug operably connected to a type-two plug by a length of insulated cable,
wherein the termination modules are operably connectable to the type-one sockets of the local distribution module either directly or indirectly via the connection cables and/or optional marshalling modules.
and wherein a type-one plug is arranged to operably engage with a type-one socket but not with a type-two socket and a type-two plug is arranged to operably engage with a type-two socket but not with a type-one socket.

### Detailed Description

The preferred features of the first aspect of the invention, as set out below, where appropriate and unless otherwise specified, are also applicable to the other aspects of the invention.

The first aspect of the invention provides a modular network having a plurality of conductive pathways. Preferably, the modular network has seven or more conductive pathways. Typically, the conductive pathways will comprise a pair of conductors connected to a single phase supply (phase and neutral - commonly referred to as "live" or "phase live" and "neutral" or "neutral live"), a circuit protective conductor(earth), a switched live conductor(switched-live), an emergency switched-live conductor(emergency switched-live), a first control conductor(D+) and a second control conductor(D-).

Typically, the modular network will be arranged to provide at least one of a power outlet socket circuit, a switched lighting circuit, an emergency lighting circuit and an environmental lighting control circuit for a structure or part thereof. It may be configured to provide all or some of these circuits.

Although the modular network preferably has at least seven conductive pathways, and will typically only have seven conductive pathways, it should be noted that in any particular network configuration, not all of the pathways might be conductively connected to form circuits. For instance, when the modules of the network are used solely to provide power outlet sockets, it may be that only the phase live, neutral and earth pathways need to be conductively connected within the modular network. However, a benefit of the invention over the prior art is its versatility for use in provision of multiple circuits by means of interconnection of modular components with reduction in, or elimination of, the need for hard-wiring. Hence, the term "operably connected" in this specification is to be taken to mean "at least partially conductively connected".

When the modules of the network are used to provide power outlet sockets and manually switched luminaires, it may be that only the live (phase), neutral, earth and switched live pathways are operably connected within the modular network, or within a relevant part of the modular network, with switch modules connected into the network and switching between phase and switched-live conductive pathways to control the luminaires.

When the modules of the network are used to provide power outlet sockets and manually switched luminaires as well as emergency luminaires (which are arranged to illuminate when an emergency condition is activated, such as a loss of main circuit power), for instance illuminating emergency exit routes, then it may be that only the phase live , neutral, earth emergency switched live and switched live pathways are operably connected within the modular network, or within a part of the modular network, with an emergency control switch connected into the network and switching between phase live and emergency switched-live conductive pathways to control the emergency luminaires.

The modular network of the invention has two types of plug and socket arrangements for interconnection of the components of the modular network, type-one and type-two. It should be noted that although the modular network may be used to provide power outlet sockets for a structure, these power outlet sockets would be conventional power outlet sockets, such as three-pin sockets according to the local national standards. For instance in the UK, the power outlet sockets will typically conform to British standard BS 1363. The power outlet sockets are not to be considered as either the type-one sockets or the type-two sockets. Instead, the type-one plug and socket arrangements and type-two plug and socket arrangements will be specific arrangements for use within the network and are not intended for manipulation by an end-user once the modular network has been installed. Typically, the interconnections of the modular network will be concealed from an end-user within conduits or behind walls or ceilings of the structure so that they are only accessible by electricians rather than accessible to the end-user.

The type-one plug and socket arrangement and the type-two plug and socket arrangement may be any suitable arrangements, with the provisos that a type-one plug is arranged to operably engage with a type-one socket but not with a type-two socket and a type-two plug is arranged to operably engage with a type-two socket but not with a type-one socket.

The arrangements should be suitable for providing interconnection of a plurality of connectors, typically at least two for control applications or three for power applications, and preferably seven or more connectors, although not all connectors will necessarily by interengaged to provide conductive pathways at every plug and socket interconnection. For instance, in a preferred arrangement, both the type-one and type-two sockets may each have seven connectors, whereas the type-one and type-two plugs may have three, five or seven connectors arranged to interconnect with the corresponding connectors of the type-one or type-two sockets when the plugs and sockets are interengaged. Hence, if a modular network, or part of a modular network, only requires earth, phase live and neutral conductive pathways, the incoming type-two plug may be a three-pin plug with the connectors arranged to provide these three circuits. If the D+ and D- control circuits are not needed for a luminaire, then, for instance it may be connected into the network at a type-one socket using a five-connector type-one plug, wherein the connectors are arranged to provide phase live , neutral, earth, switched live and emergency switched live circuits.

Hence, the selection of a 3-, 5-, or 7-connector plug may be used to configure the circuit connections for the modular network of the invention.

Preferably, the plug and socket arrangements of the invention will be arranged to be lockable in an engaged (i.e. connected) configuration. This is because, once the modular network is in place, there will be little regular disconnection of the plug and socket arrangements of the network, and so a lockable engagement is preferred to prevent unintentional disconnection of modular components of the network.

By plug, in this specification, there is no limitation intended concerning whether the connectors of the plug are male connectors or female connectors. The term "plug" is merely meant to convey that this is the part of a plug and socket arrangement that is moved to engage or disengage the plug and socket engagement whilst the socket part typically remains stationary or fixed. A plug will typically be located at an end of a connecting cable whereas a socket will be directly form part of a module of the network.

Preferably, the type-one and type-two plugs may differ from each other in that one is a male plug ,with male connectors projecting from a plug engagement face and the other is a female plug, with female connectors located in a plug face.

In a preferred configuration, the type-one plugs are male plugs and the type-two plugs are female plugs. With such a configuration, in the event that any type-one plug and socket arrangement is disconnected whilst the network is live (i.e. supplied with power), the plug with male connectors (the type-one plug) will not be live. Similarly, if any type-two plug and socket arrangement of the modular network is disconnected whilst the network is live, the socket, with male connectors (the type-two socket) will not be live. Thus, this configuration avoids male connectors (which are the connectors most likely to be accidentally or unintentionally contacted because they project from plug engagement face rather than being recessed into it) ever being live when exposed in a partially live modular network. Instead, the female connectors (either of a type-one plug or of a type-two socket) are the only connectors that may be exposed in a live state for this preferred configuration, and so are less likely to be accidentally contacted, particularly by a part of a human or animal body, provided that the female openings of the connectors are sufficiently small in aperture to prevent the ingress of body parts such as fingers.

The plug and socket arrangements, either of type-one or type-two, may suitably comprise a plug and a socket having an unengaged configuration wherein the plug and socket are physically separated and electrically unconnected, and an engaged configuration wherein the plug and socket are electrically connected and mechanically interlocked. For instance, the plug may have a plug engagement face comprising plurality of first, male or female, interlocking members adapted to mate with a plurality of second, female or male, interlocking members provided in a socket engagement face of the socket, wherein the first and second interlocking members are adapted to be brought into a first mated configuration with the plug and socket engagement faces substantially mutually parallel and brought together by a first relative movement of plug and socket along a first direction substantially normal to the engagement faces, and wherein the first and second interlocking members, when in the first mated configuration, are arranged to permit relative movement of the plug and socket into the engaged configuration along a second direction substantially parallel to the plug and socket engagement faces, and wherein the first and second interlocking members are arranged to interlock in a second mated configuration when the plug and socket are in the engaged configuration whereby separation of the engagement faces along the first direction is prevented.

The male and female interlocking members may comprise conductive members whereby electrical connection is made, but preferably, each male interlocking member may comprise a pillar having pillar walls of electrically insulating material comprising a first electrical contact, and each female interlocking member may comprise a cavity having cavity walls of electrically insulating material comprising a second electrical contact, whereby the first and second electrical contacts are electrically isolated in the first mated configuration and electrically connected in the second mated configuration.

Preferably, the male interlocking members are adapted to shield the first electrical contact from accidental contact with a human body part when the plug and socket are in the unengaged configuration. Preferably, the female interlocking members are adapted to shield the first electrical contact from accidental contact with a human body part when the plug and socket are in the unengaged configuration.

For instance, the male interlocking members may comprise a first insulating arm extending in the first direction from the plug or socket to its distal end with a second insulating arm extending from the distal end of the first arm in the second direction, wherein the first electrical contact is located between the second arm and the engagement face of the plug. The female members may then suitably comprise a first shat extending in the first direction from the plug or socket face to a basal end, adapted to allow the first and second arms of the corresponding male interlocking member to enter the female interlocking member in the first direction to give the first mated configuration, and a second shaft, extending from the basal end in the second direction, adapted to allow the second arm to slide into the second shaft in the second direction to provide the second mated configuration, and wherein the second electrical contact is located between the second shaft and the engagement face of the plug or socket, whereby the first and second electrical contacts are brought into electrically conductive contact by the second movement.

Preferably, the plug and socket arrangements of the network further comprise a latching arrangement whereby the plug and socket arrangement, once in the engaged configuration, cannot be disengaged without first releasing the latching arrangement. This latching arrangement thus acts to prevent unintentional disengagement of a plug and socket arrangement. For instance, where the plug and socket arrangement is as detailed hereinbefore, and is engaged by a first movement in a first direction substantially normal to the plug and socket engagement faces to bring the engagement faces together, mating the male and female interlocking members, followed by a second movement in a second direction substantially parallel to the plug and socket faces to mechanically engage the faces together to prevent separation in the first direction, whereby electrical connection is also made at the male and female interlocking members, then the latching arrangement is suitably configured to prevent movement back along the second direction unless the latching arrangement is unlatched.

A suitable latching arrangement may comprise a male interlocking member of a component (plug or socket) comprising a latching means in the form of a detent or pawl, such as a rib or tooth, and a corresponding female interlocking member of a component (socket or plug) comprising a notch, such as a groove or recess, arranged to engage with the latching means. For instance, where the plug and socket arrangement is interengaged by movements in first and second directions, as explained above, one of the engagement faces of the plug or the socket may comprise a resilient means arranged to urge the engagement faces apart along the first direction, such that when urged in this direction, a gap is formed between the engagement surfaces and the latching arrangement may be held in a latched configuration. Unlatching is achieved by pushing the engagement faces together, against the urging of the resilient means, whereby the gap is closed and the latching arrangement brought into an unlatched configuration, such that the plug and socket may be disengaged by mutual relative movement in the reverse of the second direction followed by separation in the reverse of the first direction. Suitably, the plug is arranged to accept an electrical cable substantially oriented along the second direction, whereby a tensile force along the cable urges the plug towards the engaged configuration.

The local distribution module of the modular network of the system is used to provide a plurality of circuits to a region of a structure. The interconnection, switching and control of the circuits will be dependent upon the termination modules connected directly, or through optional marshalling modules, to the local distribution module.

A termination module of the modular network of the invention may be a power outlet socket, comprising either a type-one plug or a type-two socket, connected to the type-one sockets of the local distribution module either directly or indirectly via the connection cables and/or optional marshalling modules. Hence, the local distribution module may be used to provide circuits for a plurality of power outlet sockets for part of a structure, such as part of a building, all powered through the local distribution module. Typically, only phase live , neutral and earth circuits will be connected for these power outlet socket modules.

A termination module of the network may be a luminaire comprising either a type-one plug or a type-two socket, connected to the type-one sockets of the local distribution module either directly or indirectly via the connection cables and/or optional marshalling modules. A luminaire will be arranged to have, as its main power supply, either the switched- live or emergency switched-live circuits. Luminaires for use in the modular network of the invention may also be provided with a digital controller, such as an electronic ballast, as part of the luminaire, such that signals to the luminaire's digital controller, sent using the D+ and D-conductive pathways, may be used to control the light output of the luminaire when it is switched on. Depending upon the use the luminaire is to be put to, and whether it is to be a switched luminaire, an emergency luminaire, digitally controlled or manually switched, the plug/socket arrangement used to connect the luminaire into the network can be suitably wired to provide the conductive pathways needed.

A termination module of the modular network of the invention may be a switching means, comprising either a type-one plug or a type-two socket, connected to the type-one sockets of the local distribution module either directly or indirectly via the connection cables and/or optional marshalling modules. It is a particularly advantageous feature of the invention that the switching means may be used by connecting it to any suitable type-one socket, so for instance the same socket could be used for either a switch means or a luminaire.

The switching means is suitably a conventional one-way on/off electrical power switch, and will typically be connected to make or break a connection between the phase live and switched-live conductive pathways connected through the switch. Such switches may be operably interconnected to one or more luminaires by operable connection of the switch module and the luminaires (directly or through a daisy-chain of further marshalling modules) to type-one sockets of the local distribution module of the network, such that when the switch makes or breaks the connection between live(phase) and switched-live circuits through the local distribution module, the luminaires connected through the local distribution module are switched on and off respectively. To achieve this, the luminaire power supply is arranged to be through the switched-live circuit from the local distribution module.

A similar arrangement may be used for an emergency lighting circuit, where the switch is an emergency switch and is arranged to make or break a connection between the phase live and emergency switched-live conductive pathways connected through the emergency switch. Any luminaires operably connected to a local distribution module (directly or through marshalling modules), where the local distribution module is also operably connected to the emergency switch, and with the power for the luminaires arranged to be supplied through the emergency switched-live circuit, will be switched on and off by the emergency switch. The emergency switch may be a manual switch, such as a circuit check switch, typically operated by a key to check correct functioning of an emergency lighting circuit, or may be a servo-controlled switch, for instance, operated by an alarm or power failure system of a structure. In one configuration, the emergency switched-live conductive pathway for the module may be connected to a central control system for the structure (such as an alarm system or building management system) so that in an emergency, the emergency switched live circuit would be made live from the central control system, perhaps using an alternative emergency power supply. However, the local emergency circuit of the modular network can be tested using the emergency switch connected to the local distribution module, connecting the emergency live to the phase live for testing.

A termination module of the network may be a power control means module comprising either a type-one plug or a type-two socket, connected to the type-one sockets of the local distribution module either directly or indirectly via the connection cables and/or optional marshalling modules. The power control means may thus be interconnected to the digital controllers of the luminaires of the network such that digital signals sent using the D+ and D+ circuits may be used to control the light output from the luminaires when they are switched on. For instance, a power control module may comprise an occupancy sensor, such as a movement detector, whereby the power control module may reduce or turn off the luminaires output when no movement is detected, thus saving energy when a space to be illuminated is left unoccupied. It is a particularly advantageous feature of the invention that the power control means may be used by connecting it to any suitable type-one socket, so for instance the same type-one socket could be used for either a power control means or for a luminaire.

For instance a power control module may comprise an ambient light sensor, whereby the power control module may reduce or turn off the luminaires output when ambient light in a space is adequate, thus saving energy when a space to be illuminated is already illuminated by ambient light.

The modular network of the invention may comprise marshalling modules. These comprise a type-two socket for input of the conductive pathways and at least one type-one socket operably connected thereto for output of the conductive pathways to other modules of the network. Marshalling modules may be used to provide differing circuit arrangements from a local distribution module of the network of the invention.

In order to facilitate the configuration of the network for its particular purpose, the operable connection between a type-one plug and a type-two plug in marshalling module or in a connection cable may have some of the conductive pathways being left unconnected.

Furthermore, an operable engagement between a type-one plug and a type-one socket may have some of the conductive pathways being left unconnected.

Similarly, an operable engagement between a type-two plug and a type-two socket may have some of the conductive pathways being left unconnected.

The type-one plugs may be colour-coded in order to indicate their function, such as what their safe current rating is and what modules they are suitable to connect. Similarly, the type-two plugs may be colour coded in order to indicate their function. The colour coding may similarly indicate the connectivity of the plugs (i.e. which connectors are connectable through that plug). Marshalling modules of the network may also be colour coded in a similar manner.

The modular network of the first aspect of the invention may comprise a marshalling module which is a two-way switch module, the two-way switch module comprising a type-two socket and two type-one sockets, wherein the type-two and type-one sockets are operably connected to provide a two-way switch when first and second switch modules are connected to each of the type-one sockets, whereby the first and second switches independently control the operation of luminaires operably connected to the type-two socket of the lighting control module. The switch modules are switch modules arranged to switch between the phase live and switched-live conductive pathways, and so are standard switch modules for use with the network of the invention. By suitable internal wiring of the lighting control module, for instance using the switched-live and D+ pathways within the lighting control module as strappers.

Other configurations of marshalling modules may be envisaged, making use of specific interconnections between the type-one sockets and type-two socket of the marshalling module to provide specific circuit connectivity.

For instance the modular network of the invention may be arranged to provide several self-contained lighting control circuits as part of the modular network. In this case, the switched-live of the central marshalling module for each self-contained lighting circuit is not connected to the switched lives of the other self-contained lighting circuits through the local distribution module. This disconnection may be by use of connection cables from the local distribution module to the respective marshalling modules where the switched live is not connected in those cables. The cables may be suitably marked to show this to facilitate correct interconnection of the modular network (such as by colour-coding).

The local distribution module is operably connected to a power supply as input, typically a single phase power supply, providing phase live , neutral and earth connections to the live(phase), neutral and earth conductive pathways of the modular network of the invention. However, the other conductive pathways are not necessarily connected outside the modular network, and so can be used for self-contained control of lighting and emergency circuits within the modular network. The local distribution module may be provided with circuit breakers on some or all of the circuits of the conductive pathways. The circuit breakers may be arranged to switch to open circuit when an excessive current is passed through them.

Alternatively, the modular network may be operably connected to a central lighting control system for the structure. For instance, the local distribution module may have one or more of the emergency switched live, D+ and D- conductive pathways operably connected to a central lighting control system. Usually, the switched live pathway will not be operably connected in this way, so that local switching of luminaires may be effected by means of the switched live conductive pathway as set out hereinbefore.

Preferred features of the first aspect of the invention, as detailed above, are applicable, where appropriate, to the other aspects of the invention detailed below.

A second aspect of the invention provides a power and lighting array as detailed above. The distribution of power to the local distribution module of each modular network in the array may be hard-wired or may be provided using high-current pluggable cabling. Each modular network of the array may have its switched-live, emergency switched-live, D+ and D- conductive pathways isolated from those of the other modular networks of the array, or one or more of these conductive pathways may be interconnected. For instance, all of the emergency switched-live pathways of the modular networks may be interconnected with a sole switch between a phase live and emergency switched live. In this case, when the alarm system is brought to an alarmed or emergency state, the switch is operated to connect the emergency switched-live pathway to a continuous live pathway or to an emergency power supply such that the emergency luminaires operably connected to the emergency circuit of each network are illuminated. The central distribution unit operably connected to a mains three pole and neutral power supply (three phase power supply), will typically be provided with circuit breakers arranged to switch to open circuit in the event of excessive current flow into their associated network module.

A third aspect of the invention provides a method for supplying power, lighting and control circuits for a structure comprising providing one or more modular networks of the first aspect of the invention or a power and lighting array according to the second aspect of the invention, as detailed hereinbefore. Typically the structure will be a building.

A fourth aspect of the invention provides a connection cable for use in a modular network according to the first aspect of the invention. The connection cable may have plugs which have seven or fewer connectors, but typically at least three connectors, depending upon the purpose for which the cable is intended. For instance, a cable intended solely for bringing a single phase power supply into a modular network of the invention, and not for providing connections to the other conductive pathways, may only require phase live , neutral and earth connectors. Alternatively, all of the connectors may be present, but no conductive connection may be provided within the cable for the conductive pathways that are not to be interconnected. As explained above, the plugs of the connection cable may be colour-coded in order to identify their purpose or connectivity.

A fifth aspect of the invention provides a marshalling module for use in a modular network according to the first aspect of the invention. Marshalling modules of the fifth aspect may take the form of so-called tee-connectors or, for instance, may be in the form of marshalling boxes comprising a type-two socket for input of the conductive pathways and at least one, typically two or more type-one sockets operably connected thereto for output of the conductive pathways. Typically, the interconnections within a marshalling module will be rated to 13 Amperes or more, typically 16 A or more for lighting and 32A or more for power.

Typically, for marshalling modules of the invention, all conductive pathways are interconnected within the marshalling module such that connectors of type-one sockets are conductively connected to the corresponding connectors of the type-two socket input connector. However, marshalling modules with specific interconnections between type-one and type-two sockets may also form part of the invention. For instance, a marshalling module may have connectors operably interconnected in order to form a two-way switch module as described hereinbefore.

A sixth aspect of the invention provides a kit of parts for interconnecting to form a modular network according to the first aspect of the invention. Typically, the various parts used for forming the modular network of the invention will be provided as ready-wired or prefabricated components. Cables will be provided in various lengths such that components may be selected to suit particular installation requirements, and may be coded depending upon their connectivity for easy identification, for instance colour-coded.

The modular network of the invention may be used to distribute power and control to an entire building or may be used for a part of a building. In this latter situation, it may be appropriate to provide the input mains power to the modular network from a mains cable already present in the building. This may be achieved by replacing an existing junction box, such as a ceiling rose junction box by a power outlet module, provided with a type-one socket. Such a power outlet module may be used to replace an existing junction box from a previous hardwired system in order to tap into the mains power supply from the previous system. This may suitably be achieved by merely replacing the lid of an existing junction box with a lid comprising a type-one socket.

### Examples

Specific embodiments of the present invention will now be described, by way of example only, with reference to the accompanying drawings in which:

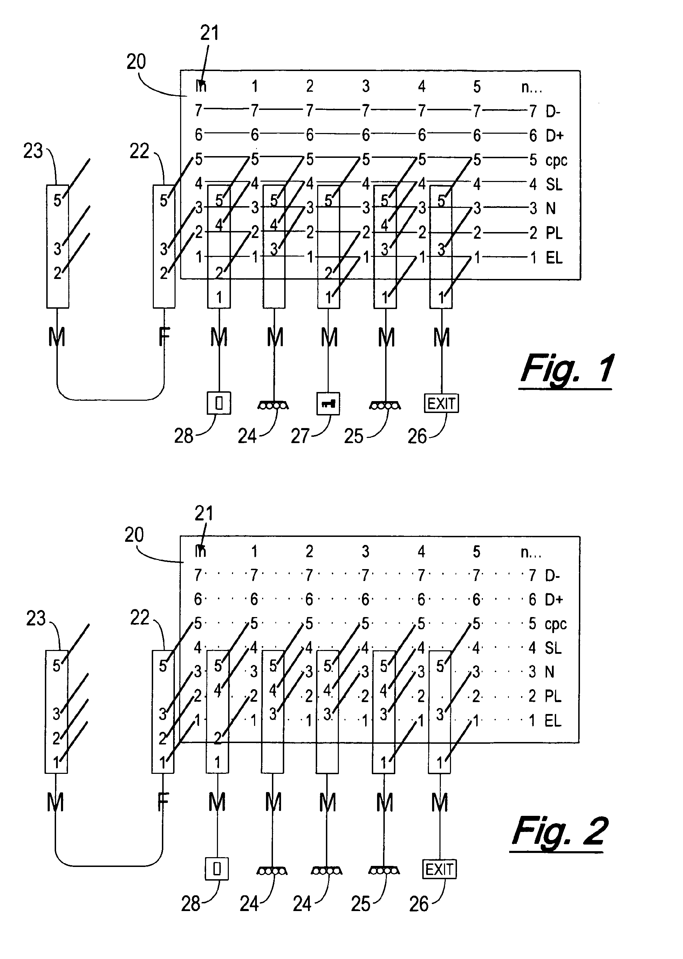

Figure 1 to 16 show schematic wiring diagrams for modular networks according to various embodiments of the invention. In each of these Figures, male plugs are denoted by M and female denoted by F. Sockets are not shown in detail. The embodiments in the Figures have seven conductive pathways labelled EL (emergency live), PL (phase live ), N (neutral live), SL (switched live), cpc (earth) D+ and D- (digital control lines).
Figure 1 shows a first embodiment of a modular network according to the invention. A local distribution module 20 is supplied with single phase power at a first female socket 21 by means of a female plug 22 connected to an external power supply via the male plug 23. The marshalling box 20 comprises five female sockets, numbered 1 to 5 in the Figure, the connectors of the female sockets of the local distribution module 20 are conductively connected as shown in the Figure. Luminaires 24, 25 and 26 are connected to the local distribution module 20 by means of male plugs. Emergency key switch 27 and one way switch 28 are also operably connected to the local distribution module by male plugs interengaging with female sockets. From the wiring diagram shown in Figure 1, it can be seen that one way switch 28, which is arranged to switch between phase live and switched live conductive pathways, will be able to turn luminaires 24 and 25 on and off. Similarly, emergency key switch 27 acts as an on/off switch for testing emergency luminaires 25 and 26, which are operably connected to the emergency live line. The emergency key switch is arranged to switch between the emergency live line and permanent phase live so that the emergency lighting system can be tested. The arrangement shown allows luminaire 25 to act as both a switchable luminaire and an emergency luminaire. Luminaire 26 is specifically an emergency exit luminaire.
Figure 2 shows a similar arrangement to that shown in Figure 1 but with the emergency key switch 27 replaced by a standard luminaire 24. Whereas in the embodiment shown in Figure 1 only the earth, neutral and phase live lines were connected for male plug 23 and female plug 22, in this embodiment the emergency live line is also connected between these two plugs. For this circuit arrangement as shown in Figure 2, the emergency exit luminaire 26 will only be illuminated when the emergency live line is made live through male plug 23. Once the emergency live line is made live in this way, combined luminaire 25 and emergency exit luminaire 26 will be illuminated. Luminaires 24 and combined luminaire 25 are switched on and off by one way switch 28 which is arranged to switch between live and switched live conductive pathways.

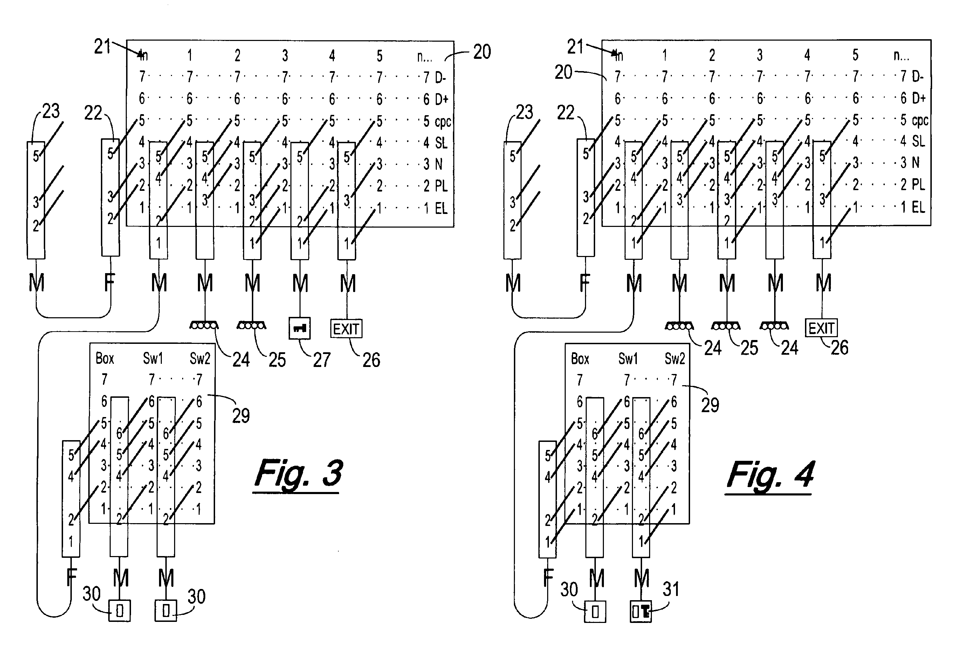

Figure 3 shows an arrangement similar to that for Figure 1 where the power input via plugs 22 and 23 only involves connection of the phase live , neutral and earth circuits. The one way switch 30 has been replaced by a two-way switch arrangement 29. The two-way switch module 29 is wired internally to enable two one way switches, 30 to individually control the luminaires 24 and 25. The two-way switch module 29 is connected through to the local distribution module 20 through only the earth, switched live and phase live conductive pathways, controlling switching between the phase live and switched live pathways in order to switch the luminaires on and off.
Figure 4 shows another embodiment of a network according to the invention. As for Figure 3, the one way switch 28 has been replaced by a two-way switching module 29. In this case, the switches 30 and 31 plugged into the two-way switching module 29 are a one way switch 30 and a combined one way switch and emergency key switch 31. In this embodiment, the switching module 29 is operably connected to the local distribution module 20 via the conductive pathways emergency live, permanent phase live, switched live and earth. Luminaires 24 and 25 are switched on and off by either of the two-way switches 30 and 31. The emergency key switch 31 also controls luminaires 25 and emergency luminaire 26.

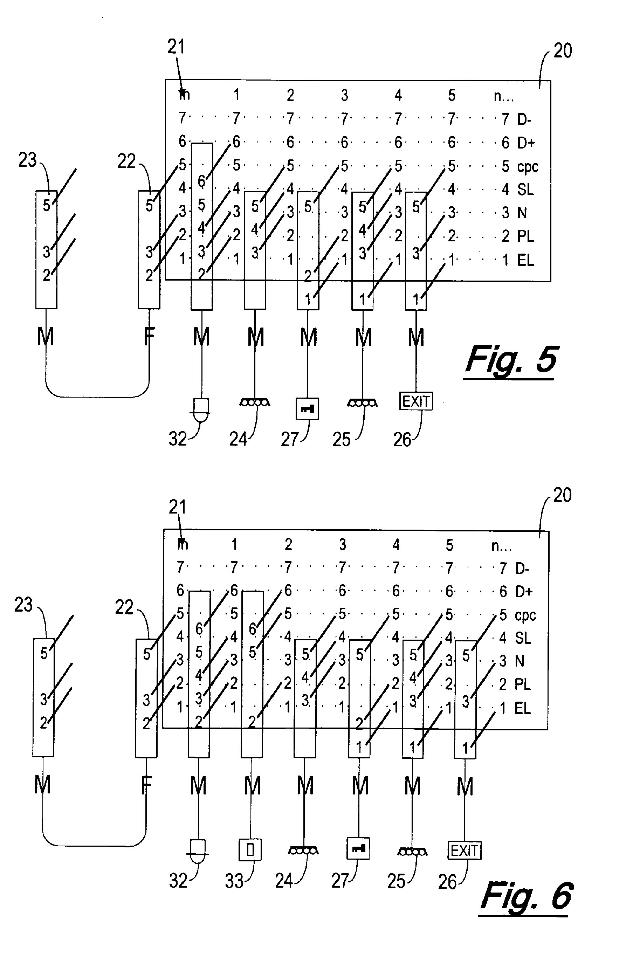

Figure 5 shows an embodiment of a module network of the invention similar to that in Figure 1 but with the one way switch 28 replaced by an occupancy sensor 32. In this embodiment, the switching of the luminaires 24 and 25 is controlled by the occupancy sensor 32 which is arranged to switch between switched live and permanent phase live lines depending upon occupancy. In this case no digital control is used. The occupancy sensor is a standard switch rather than a digital controller. Hence, the system is switched in exactly the same way as the embodiment shown in Figure 1 but with the standard occupancy sensor controlling luminaires 24 and 25 rather than the manual one way switch 28 of Figure 1.
Figure 6 shows an embodiment similar to that shown in Figure 5 but with a further manual switch 33 operably connected to the local distribution module 21. One way switch 33 is interconnected in such a way as to act as a two-way switch along with the occupancy sensor 32 such that it can trigger an absence setting or override an off setting and so directly control the luminaires rather than having them controlled by the occupancy sensor 32.

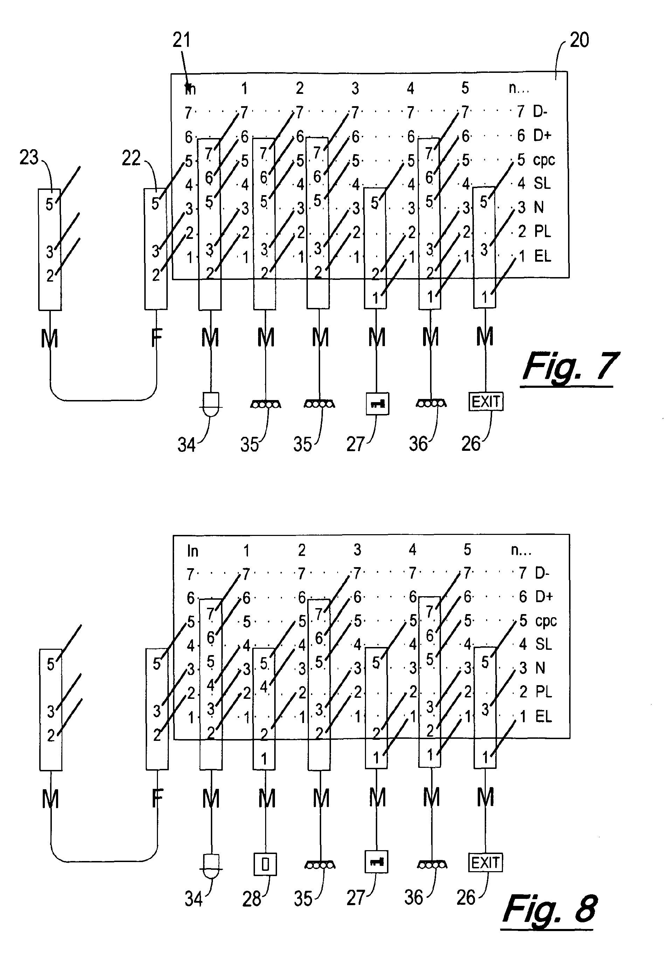

Figure 7 shows another embodiment of a modular network according to the invention. In this case, the occupancy sensor 34 is a digital occupancy sensor and the luminaires 35 and 36 are digitally controlled through lines D+ and D-.
Figure 8 shows a further embodiment of the invention, using digital luminaires 35, 36 and digital occupancy sensor 34 in the network. A manual one way switch 28 operable to connect between phase live and switched live conductive pathways is also included. In this embodiment, the digital occupancy sensor is wired in order to allow the manual switch 28 to act as an override.

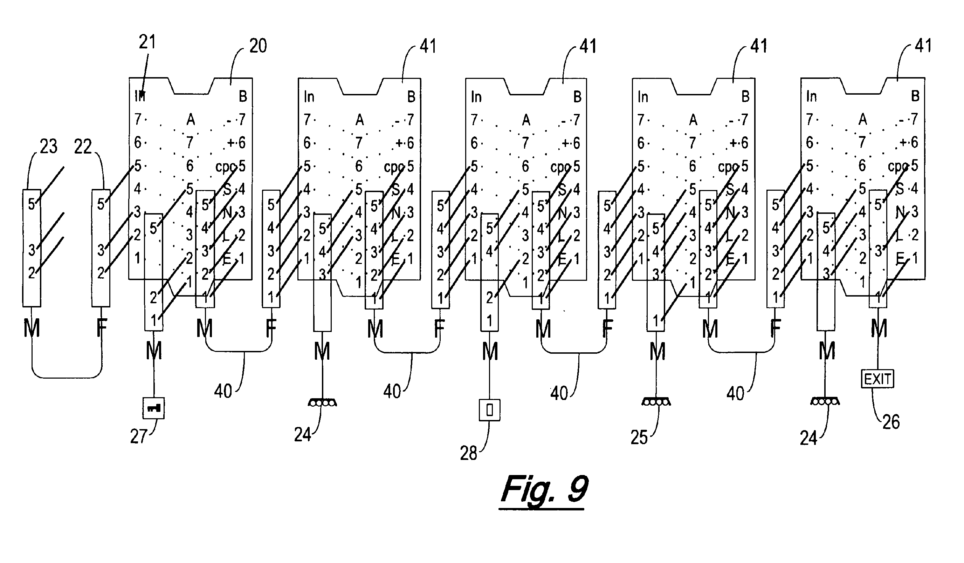

Figure 9 shows a modular network according to the invention set up as a daisy chain system. The embodiment shown in Figure 9 is for a basic lighting circuit with luminaires 24, combined standard and emergency luminaires 25, emergency key switch 27 and manual one way switch 28. The network also includes an emergency luminaire 26. As for the arrangement in Figure 1, phase live, neutral and earth conductive pathways are connected into the local distribution module 20 through male and female plugs 23 and 22. Emergency key switch 27 is connected to the local distribution module 20 but subsequent connections within the network are made through connection cables 40 to marshalling modules 41. In the connection cables, the earth, phase live, neutral, switched live and emergency switched live lines are all operably and conductively connected. Similarly, all connectors are conductively connected to their respective connectors within the marshalling modules 41.

The system as shown in Figure 9 operates in the same way as that shown in Figure 1, but through a daisy chain arrangement rather than a spider arrangement.

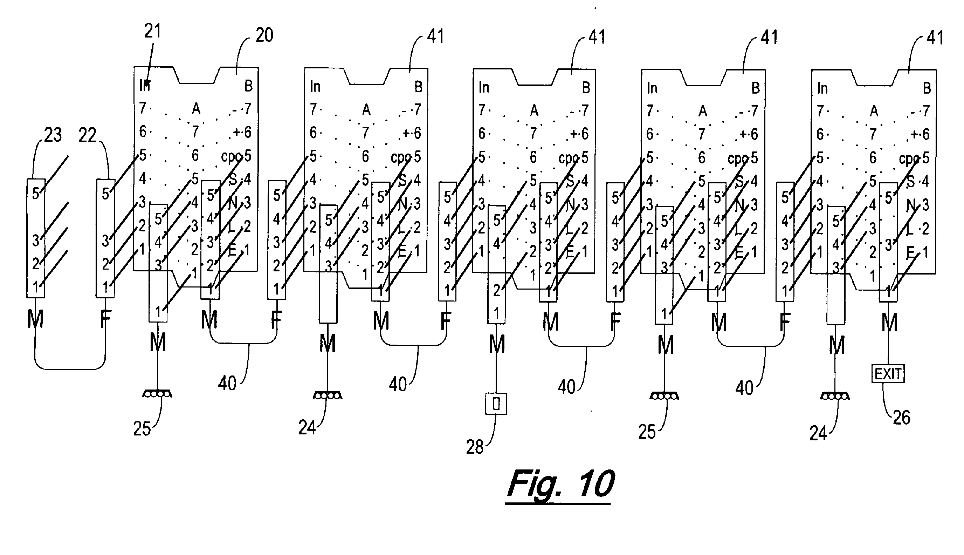

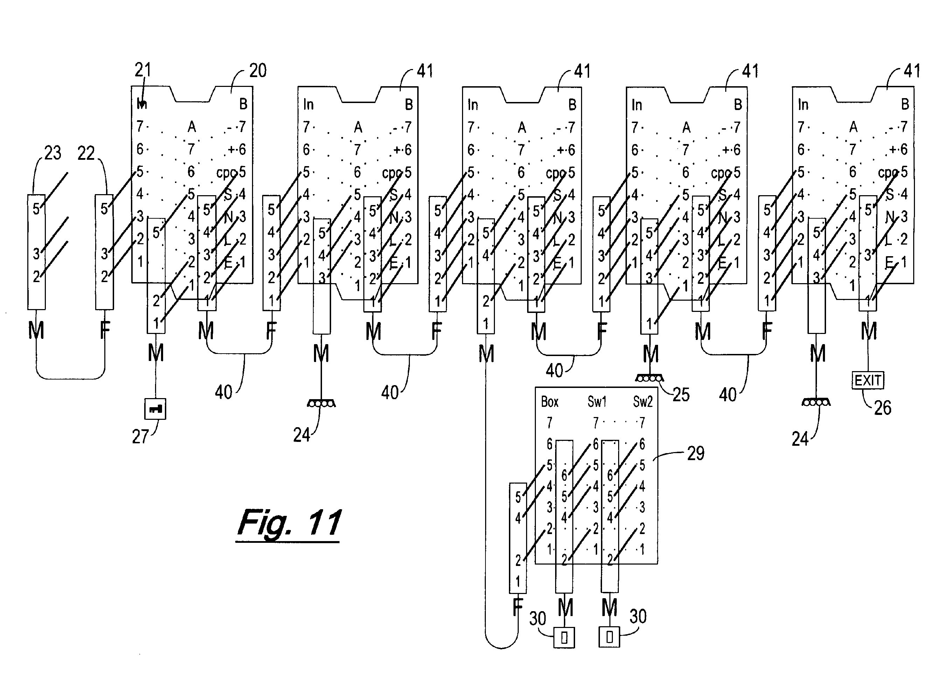

Figure 10 shows a similar arrangement to that shown in Figure 9, but in this case the emergency switched live conductive pathway is also interconnected through the input cable at socket 21 fed by male plug 23 to female plug 22. Hence, as for the arrangement shown in Figure 2, the emergency system is tested externally from a central control unit rather than by means of the emergency key switch 27, which is now omitted from the network. Figure 11 shows an arrangement similar to that in Figure 9 but with the manual one way switch 28 replaced by a two-way switching arrangement as described previously, for instance, as in the embodiment shown in Figure 3.

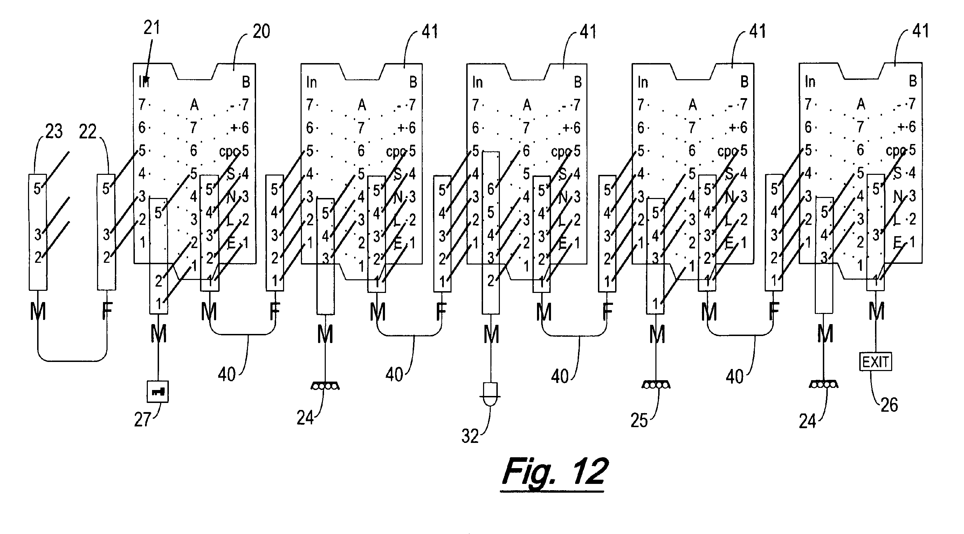

Figure 12 shows a daisy chain circuit with a standard (non-digital) occupancy sensor, standard luminaires, standard and emergency luminaires and emergency luminaire. The operation of this embodiment is essentially the same as that for the embodiment shown in Figure 5. However, a daisy chain arrangement is used rather than the central local distribution module configuration used in Figure 5.

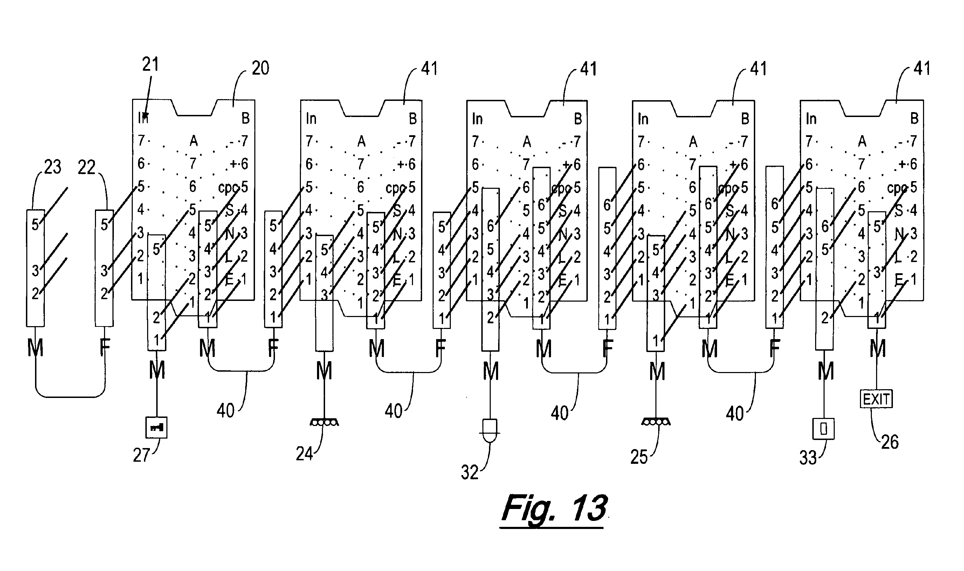

Figure 13 shows an arrangement similar to that shown in Figure 6 where a one way manual switch 33 is wired in order to act as an override for the occupancy sensor 32.

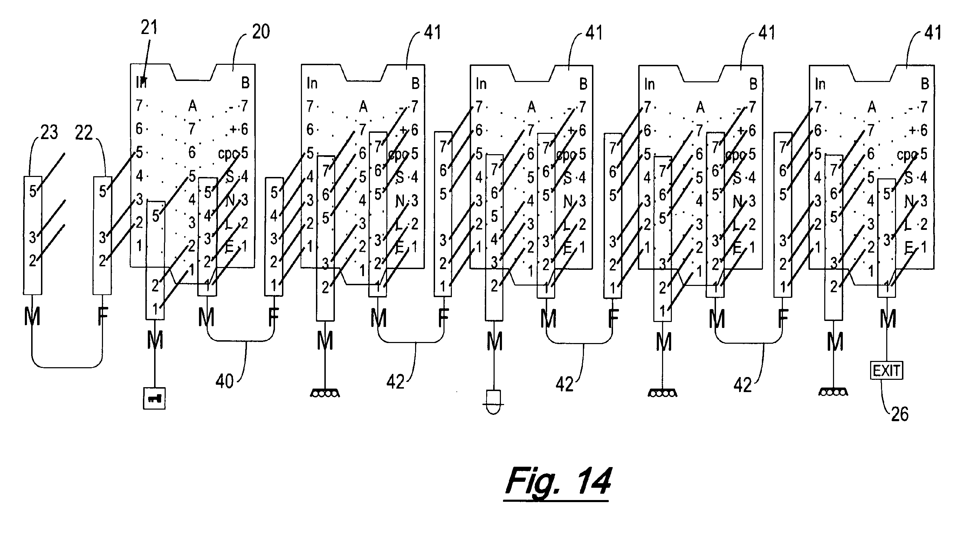

Figure 14 is a daisy chain system using a digital occupancy sensor, digitally controlled luminaires and emergency luminaries. In this case the digital signals are sent through lines D+ and D-. Connection cables 42 as shown in Figure 14 are arranged to carry through all conductive pathways other than the switched live conductive pathway which is not needed in this example.

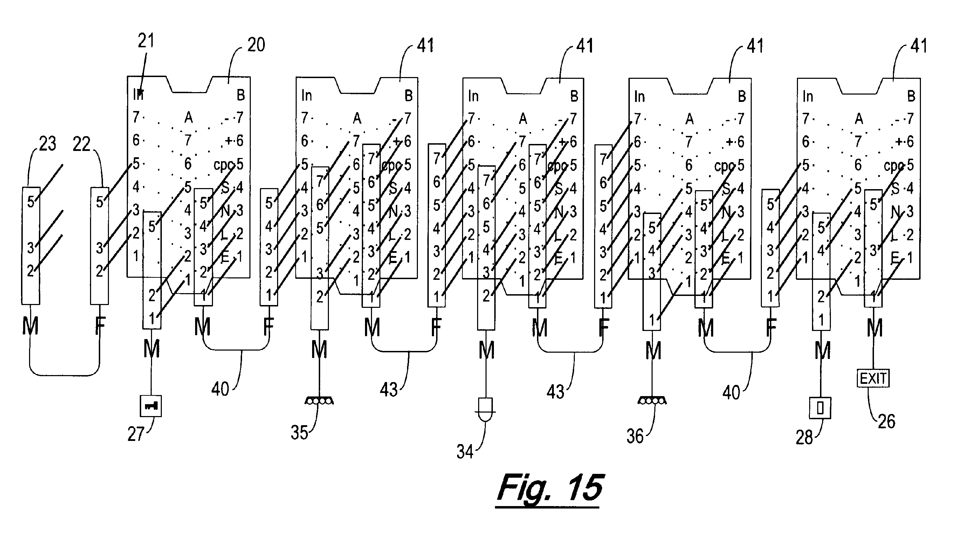

Figure 15 shows an embodiment of the invention as for Figure 14 but also including an override wall switch 28. In this case the connection cables 40 are only arranged to interconnect earth, phase live, neutral, switched live and emergency live whereas the connection cables 43 are arranged to provide conductive interconnection for all seven conductive pathways.

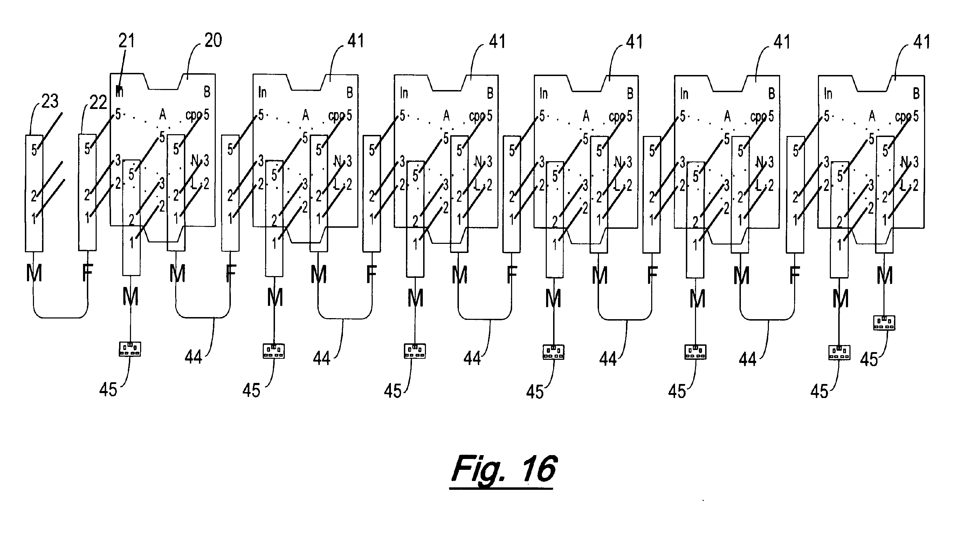

Figure 16 shows an embodiment of the invention for distribution of electrical power outlet sockets within a building. This is a straightforward daisy chain arrangement with the phase live, neutral and earth circuits carried through from the local distribution module 21 to the daisy-chained marshalling modules 41. Connection cables 44 are arranged to only interconnect phase live, neutral and earth circuits between the local distribution module and the daisy-chained marshalling module. Power outlet sockets 45 are connected into the local distribution module and the marshalling modules through a male plug.

It will be appreciated that numerous modifications to the above described embodiment may be made without departing from the scope of the invention as defined in the appended claims.

The described and illustrated embodiments are to be considered as illustrative and not restrictive in character, it being understood that only the preferred embodiments have been shown and described and that all changes and modifications that come within the scope of the inventions as defined in the claims are desired to be protected. It should be understood that while the use of words such as "preferable", "preferably", "preferred" or "more preferred" in the description suggest that a feature so described may be desirable, it may nevertheless not be necessary and embodiments lacking such a feature may be contemplated as within the scope of the invention as defined in the appended claims. In relation to the claims, it is intended that when words such as "a," "an," "at least one," or "at least one portion" are used to preface a feature there is no intention to limit the claim to only one such feature unless specifically stated to the contrary in the claim. When the language "at least a portion" and/or "a portion" is used the item can include a portion and/or the entire item unless specifically stated to the contrary.

## Claims

1. A modular network for providing power, lighting and control circuits for a location in a structure,
wherein the modular network comprises a plurality of conductive pathways operably distributed to a plurality of power outlet sockets and/or luminaires and/or switching means and/or power control means,
wherein the modular network comprises:
a local distribution module operably connected to a power supply as input and comprising a plurality of type-one sockets for output of the conductive pathways,
optionally, one or more marshalling modules comprising a type-two socket for input of the conductive pathways and at least one type-one socket operably connected thereto for output of the conductive pathways,
one or more termination modules selected from power outlet sockets, luminaires, switching means, power control means and combinations thereof, each comprising either a type-one plug or a type-two socket,
and one or more connection cables comprising a type-one plug operably connected to a type-two plug by a length of insulated cable,
wherein the termination modules are operably connected to the type-one sockets of the local distribution module either directly or indirectly via the connection cables and/or optional marshalling modules.
and wherein a type-one plug is arranged to operably engage with a type-one socket but not with a type-two socket and a type-two plug is arranged to operably engage with a type-two socket but not with a type-one socket.

2. A modular network according to claim 1 wherein the type-one plug is a male plug and the type-two plug is a female plug.

3. A modular network according to claim 1 or claim 2 comprising seven or more conductive pathways.

4. A modular network according to claim 3 wherein the conductive pathways comprise a phase live conductor, a neutral conductor, a circuit protective conductor, a switched live conductor, an emergency switched-live conductor, a first control conductor and a second control conductor.

5. A modular network according to any preceding claim arranged to provide at least one of a power outlet socket circuit, a switched lighting circuit, an emergency lighting circuit and an environmental lighting control circuit for a structure or part thereof.

6. A modular network according to any preceding claim further comprising a two-way switch module, the two-way switch module comprising a type-two socket and two type-one sockets, wherein the type-two and type-one sockets are operably connected to provide a two-way switch when first and second switch modules are connected to each of the type-one sockets, whereby the first and second switches independently control the operation of luminaires operably connected to the type-two socket of the two-way switch control module.

7. A modular network according to any preceding claim arranged to provide a self-contained lighting control circuit as part of the modular network.

8. A modular network according to any preceding claim operably connected to a central lighting control system for said structure.

9. A power and lighting array comprising a plurality of modular networks according to any preceding claim for providing power, lighting and control circuits for a plurality of locations in a structure and central distribution unit operably connected to a mains external three pole and neutral power supply, wherein the power supply for each modular network is provided by the central distribution unit.

10. A method for providing power, lighting and control circuits for a structure,
comprising providing one or more modular networks according to any of claims 1 to 8, or a power and lighting array according to claim 9, in the structure.

11. A connection cable for use in a modular network according to any of claims 1 to 8 comprising:
a first electrical plug of type-one at a first end,
a second electrical plug of a type-two at a second end,
three or more insulated electrical wires operably connecting the connection pins of the first and second plugs,
and wherein the connectors of the type-one plug are arranged to engage operably with corresponding connectors of a type-one socket but not with connectors of a type-two socket and the connectors of the type-two plug are arranged to engage operably with corresponding connectors of said type-two socket but not with connectors of said type-one socket.

12. A connection cable according to claim 11 wherein the first electrical plug is a male plug and the second electrical plug is a female plug.

13. A marshalling module for use in a modular network according to any of claims 1 to 8 comprising:
a first electrical socket of type-two, and
a plurality of second electrical sockets of type-one,
wherein the connectors of the type-two socket are operably connected to corresponding connectors of the type-one sockets, and
wherein the connectors of the type-one sockets are arranged to engage operably with a type-one plug but not with a type-two plug and the connectors of the type-two socket are arranged to engage operably with said type-two socket but not with said type-one socket.

14. A marshalling module according to claim 13 wherein the first electrical socket is a male socket and the second electrical socket is a female socket.

15. A kit of parts for interconnecting to form a modular network according to any of claims 1 to 8, wherein the kit comprises:
a local distribution module operably connectable to a power supply as input and comprising a plurality of type-one sockets for output of the conductive pathways,
optionally, one or more marshalling modules comprising a type-two socket for input of the conductive pathways and at least one type-one socket operably connected thereto for output of the conductive pathways,
one or more termination modules selected from power outlet sockets, luminaires, switching means, power control means and combinations thereof, each comprising either a type-one plug or a type-two socket,
and one or more connection cables comprising a type-one plug operably connected to a type-two plug by a length of insulated cable,
wherein the termination modules are operably connectable to the type-one sockets of the local distribution module either directly or indirectly via the connection cables and/or optional marshalling modules.
and wherein a type-one plug is arranged to operably engage with a type-one socket but not with a type-two socket and a type-two plug is arranged to operably engage with a type-two socket but not with a type-one socket.
